# EUROPEAN PATENT APPLICATION

(11) **EP 4 685 040 A1**
(43) Date of publication of application: **28.01.2026**
(21) Application number: 25191105.3
(22) Date of filing: 22.07.2025
(51) Int. Cl.: B62J 17/10, B62J 29/00

(54) **AERODYNAMIC APPENDAGE**

(30) Priority: 25.07.2024 IT 202400017302
(71) Applicant: Barracuda S.r.l., 50041 Calenzano (FI) (IT)
(72) Inventor: GIARDINA, Alessandro, I-50142 Firenze (IT); IUSO, Matteo, I-50127 Firenze (IT)
(74) Representative: Mincone, Antimo

(57) **Abstract**

Aerodynamic appendage (1) comprising: a mounting base (61); a fixed part (2) with an upper surface (2U), a lower surface (2L), a leading edge (2F) and a trailing edge (2R); and a movable part (3) provided with a reflecting front surface (31); the movable part (3) is hinged to the fixed part (2) on one of its leading or trailing edges, so that it can rotate around a corresponding hinge axis (A32), such that the movable part (3) can assume a closed position in which its rear surface (310) opposite the reflecting surface (31) is close to the lower surface (2L) of the fixed part (2) and an open position in which its rear surface (310) is spaced from the lower surface (2L) of the fixed part (2) and the front reflecting surface (31) is visible; the mounting base (61) comprises a joint (6) which allows the aerodynamic appendage (1) to be oriented according to a variety of use positions.

## Description

The present invention relates to an aerodynamic appendage for motorbikes and a kit of aerodynamic appendages.

More particularly, an aerodynamic appendage in accordance with the present invention is of a type that can be used not only to produce an aerodynamic downforce, but also as a rearview mirror.

EP3988436A1 discloses a convertible rearview mirror for motorbikes, comprising a fixed part connectable to a surface of a vehicle and a movable part provided with a reflecting surface, wherein the movable part is connected to the fixed part by means of a suitable joint such that it can rotate to ahve a first position in which the reflecting surface is used and a second position in which the reflecting surface is not visible to the user. Said movable part has a cross-section shaped as an aerodynamic profile capable of generating a downforce when it is placed in the second position, i.e. when the reflecting surface is not usable.

DE202017001980U1 discloses an adjustable rearview mirror housing.

EP2033886A2 discloses a rearview mirror for motorbikes comprising a part connected to the frame of a motorbike configured to assume a retracted position and an extracted position.

EP3072791A1 discloses an aerodynamic appendage for motorbikes on one end of which a shell is provided for housing a rearview mirror.

The main object of the present invention is to propose an aerodynamic appendage for motorbikes that can be used to produce aerodynamic downforce in racing use, particularly on the front side of a motorbike provided with such an appendage, and at the same time to provide a reflecting surface that acts as a rearview mirror in road use, without however deteriorating the downforce thus produced.

This result has been reached, in accordance with the present invention, by adopting the idea of providing an aerodynamic appendage having the characteristics indicated in claim 1. Other characteristics of the present invention are the subject of the dependent claims.

Thanks to the present invention, it is possible to provide, using a constructively and mechanically simplified structure, an appendage capable of performing both the function of aerodynamic force generator useful in driving motorbikes at high speeds, for example on racetracks, while also having a rear-view mirror as required for driving on roads open to traffic.

These and further advantages and characteristics of the present invention will be more and better understood by any skilled person in the art thanks to the following description and the accompanying drawings, provided by way of example but not to be considered in a limiting sense, in which:
- Figs. 1-3 are three perspective views of an aerodynamic appendage in accordance with the present invention in a first configuration of use;
- Fig.4 is a perspective view of the aerodynamic appendage of Figs.1-3 in a second configuration of use;
- Fig.5 is an exploded perspective view of the aerodynamic appendage shown in Figs.1-4;
- Fig.6 is a further exploded perspective view of the aerodynamic appendage shown in Figs.1-4;
- Figs.7 and 8 represent possible applications of the aerodynamic appendage shown in Figs. 1-6;
- Figs. 9 and 10 represent a further embodiment of an aerodynamic appendage in accordance with the present invention;
- Fig.11 schematically represents an airflow investing an aerodynamic appendage in accordance with the present invention with the reflecting surface in open position.

The following description provides possible examples of implementation of an aerodynamic appendage in accordance with the present invention.

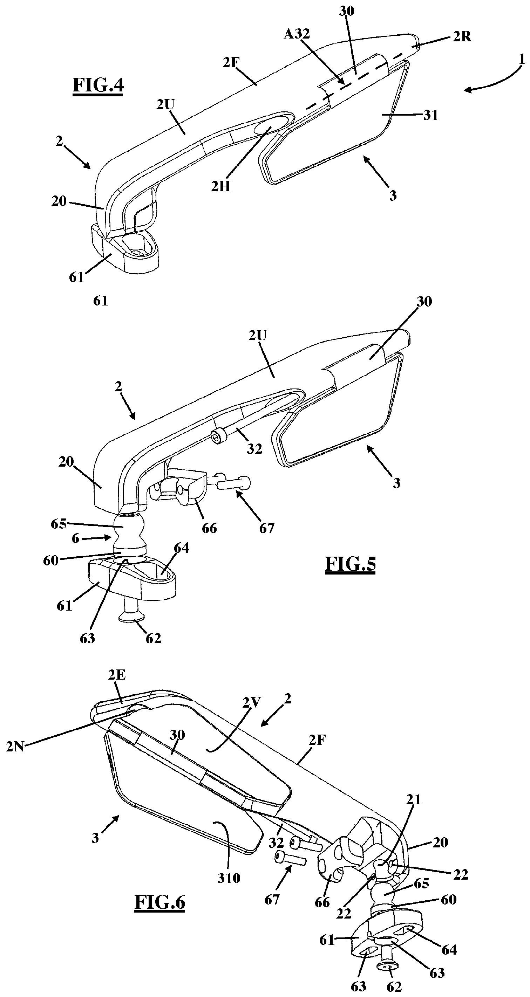

Referring to the accompanying exemplary drawings, an aerodynamic appendage (1) in accordance with the present invention comprises a fixed part (2), adapted to be connected to a surface of a motorbike (MC) at a predetermined position, and a movable part (3) hinged along one side thereof (30) to the fixed part (2) and provided with a reflecting front surface (31). Said fixed part (2) has a front edge or leading edge (2F) and a rear edge or trailing edge (2R). In use, the fixed part (2) of the aerodynamic appendage (1) has a dorsal or upper surface (2U) and a ventral or lower surface (2L). Said side (30) of the movable part (3) may be constituted, for example, by a tubular protrusion located in a discontinuity (2D) of the trailing edge (2R) of the fixed part (2) and connected to the latter by means of a screwed pin (32) oriented longitudinally with respect to said trailing edge (2R) and passing through the tubular appendage (30) and through two coaxial holes (2H) formed on the trailing edge (2R) on opposite sides with respect to said discontinuity. In other words, in this example, the trailing edge (2R) of the fixed part (2) has a recess (2D) in which the tubular projection (30) of the movable part (3) is located, and the pin (32) joins the movable part (3) with the fixed part (2) passing axially in the tubular projection (30) and in the trailing edge (2R) of the fixed part (2). Thus, said side (30) of the movable part (3) forms an element of the trailing edge of the fixed part (2) by occupying the space delimited by the recess (2D). In Fig.4 the reference "A32" indicates the axis of the hinge realized by the pin (32).

The rotation of the movable part (3) around its side (30) determines its positioning in an extended position, in which the reflecting surface (31) is visible to the driver, thus acting as a rearview mirror, and respectively in a closed position in which the reflecting surface approaches the ventral surface (2L) of the fixed part (2).

The opening angle of the movable part (3) in relation to the fixed part (2), chosen by the driver according to his needs, is maintained by the same pin (32) which also acts as a friction element, allowing the resistance offered to the opening and closing movement of the movable part (3) to be adjusted according to how tightly it is screwed.

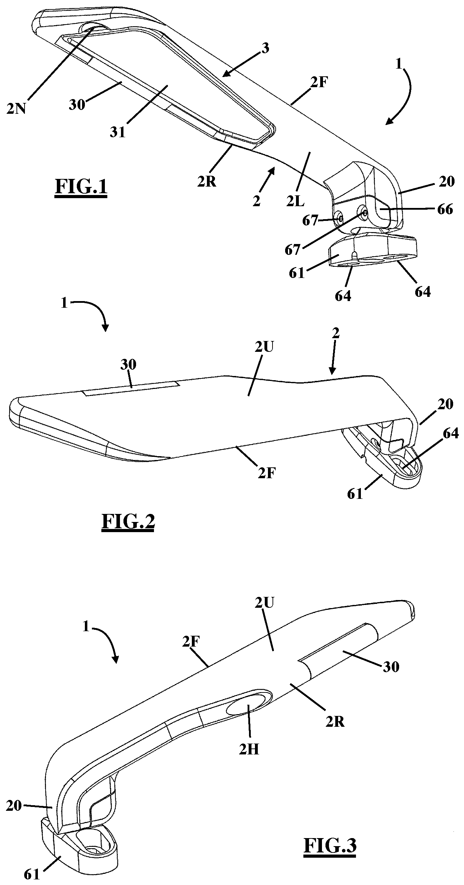

In Figs. 1-3 and Fig.7 the movable part (3) is close to the ventral surface (2L) of the fixed part (2), i.e. in the closed position, while in Figs.4-6 and Fig.8 it is in the extracted position.

The extracted position, or open position, of the moving part (3) is the position the driver uses when driving on roads open to traffic where use of the rear-view mirror is required. The retracted position of the movable part (3) is particularly usable while driving on racetracks where the use of the rear-view mirror is not mandatory.

The aerodynamic appendage (1) is configured for generating an aerodynamic force, in particular a downforce, when it is surrounded by an airflow related to the movement of the motorbike.

In order to facilitate said hinge connection of the movable part (3) with the fixed part (2), the trailing edge (2R) of the fixed part (2) is preferably thicker than the leading edge (2F). The downforce function of the aerodynamic appendage (1) 3 is also ensured by the appropriate fitting thereof in relation to the surface of the motorbike on which it is mounted.

In principle, in accordance with the present invention, the movable part (3) could also be hinged to the leading edge (2F) of the fixed part. However, the mounting of the movable part (3) by means of a hinge connection with the trailing edge (2R) is preferred because the air flowing over the movable part (3) during motion of the vehicle in this case favors the maintenance of the open position of the movable part.

Preferably, the ventral surface (2L) of the fixed part (2) has a depression (2V) whose shape corresponds to the shape of the movable part (3) such that, in said approach position, the rear surface (310) of the movable part (3), i.e. the surface opposite to the reflecting surface (31), is inside the depression (2V). Thus, in said approach position, the movable part (3) can be accommodated in the depression (2V) and the reflecting surface (31) forms a part of the ventral surface (2L) of the fixed part (2).

Preferably, a recess (2N) is also formed on one side of said depression (2V) in order to facilitate the rotation of the movable part (3) by the user who, thanks to the presence of the recess (2N), can more easily insert a finger therein and grip the movable part (3) even when wearing a glove. Preferably, said recess (2N) is formed on one side (2Z) of the depression (2V) adjacent to the outer lateral edge (2E) of the fixed part (2).

For example, said fixed part (2) may be mounted on a fairing (4) of the motorbike (MC).

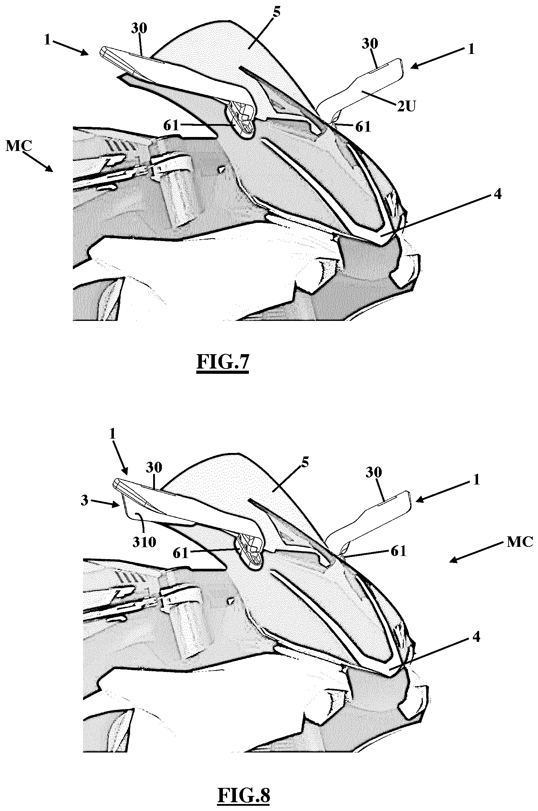

**In** the illustrative examples of Fig.7 and Fig.8, two aerodynamic appendages (1) in accordance with the present invention are used, mounted on the fairing (4) in laterally symmetrical positions with respect to the windscreen (5).

For example, said fixed part (2) can be connected to the fairing (4) by means of a spherical joint (6) constrained to one end (20) of the same fixed part (2) to allow the latter to be oriented, with respect to the fairing (4), according to the needs of the driver. **In** the illustrative embodiment shown in the drawings, the spherical joint (6) has a stem (60) that is internally and axially threaded and fixed to a base (61) by means of a screw (62) screwed on the opposite side of the stem (60) in the internal thread of the latter. The base (61) has a seat (63) for said stem (60). **In** this example, the base (61) has two through holes (64) formed on opposite sides of said seat (63), which can be used to mount the aerodynamic appendage (1) on the fairing (4) by means of two corresponding screws (not visible in the drawings). Similarly, said end (20) of the fixed part (2) has a seat (21) adapted for housing the spherical head (65) of the joint (6). The spherical joint (6) is definitively secured to said end (20) by means of a shaped block (66) which, in turn, is secured to the end (20) of the fixed part (2) by means of screws (67) intended to be screwed into corresponding holes (22) formed in the sides of the seat (21). **In** this way, a system for connecting the aerodynamic appendage (1) to the motorbike (MC) is realized, which is particularly simple both constructively and in terms of assembly.

The spherical joint connection allows the aerodynamic appendage (1) to be oriented according to a plurality of different orientations according to the driver's requirements as mentioned above.

To facilitate the use of a spherical joint as described above, said end (20) of the fixed part (2) is bent downwards with respect to the dorsal and ventral surfaces of the latter. In this way, a housing zone for the spherical joint is provided which is suitably spaced from the zone of the fixed part (2) to which the movable part (3) is connected. Preferably, the fixed part (2) is enlarged at a predetermined distance from the end (20) to which the spherical joint (6) is connected. Preferably, the movable part (3) is hinged to the wider part of the fixed part (2). In other words, preferably, the fixed part (2) has a first zone of greater area than a second zone where the movable part (3) is hinged.

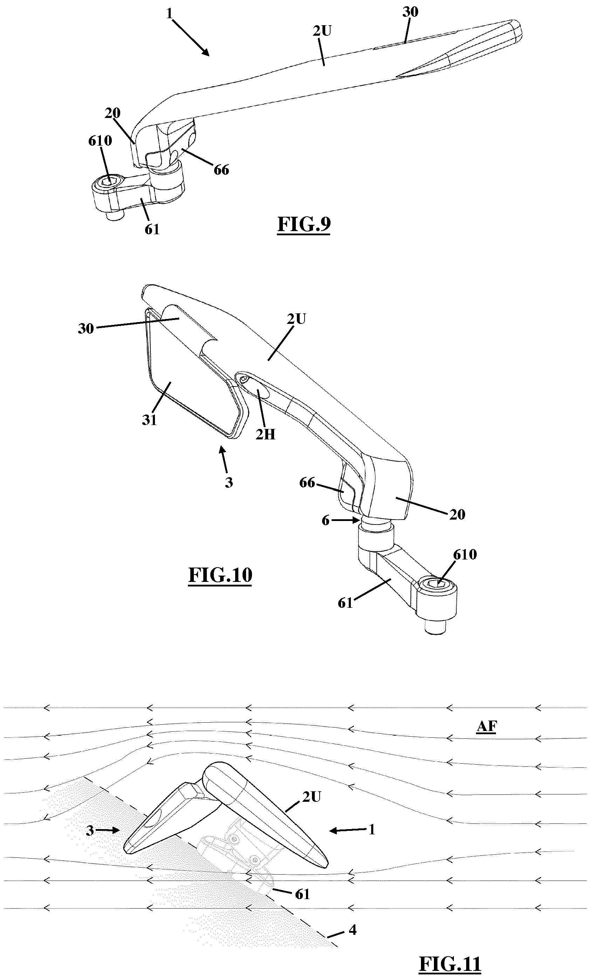

In the embodiment shown in Fig.9 and Fig. 10, the aforementioned base (61) comprises an arm which can be connected to the handlebars of the motorbike by means of an attachment appendix (610) known in itself. However, the use of a spherical joint (6) connecting the base (61) with one end (20) of the fixed part (2) as described for the previously illustrated example 5 is also envisaged in this example.

It is understood that the connection of the aerodynamic appendage (1) to the motorbike can be of any other type.

Fig.11 schematically shows the airflow (AF) flowing over the aerodynamic appendage (1) in the configuration in which the movable part (3) is open while the vehicle is in motion. The diagram in Fig.11 is intended to highlight the fact that the opening of the mobile part (3) does not substantially modify the downforce produced by the fixed part (2), as in the open position the mobile part (3) is aerodynamically shielded by the fixed part (2).

In other words, given the positioning of the aerodynamic appendage (1), mounted on the motorbike so as to be inclined with the leading edge facing downwards, the movable part (3), when set in the open position, is in an aerodynamic shadow zone downstream of the fixed part (2) with respect to the airflow (AF).

It is also an object of the present invention to provide a kit comprising two aerodynamic appendages (1) structured as described above and configured to be mounted one on a right side and the other one on a left side of a motorbike.

It is evident from the foregoing description that, in more general terms, an aerodynamic appendage (1) in accordance with the present invention comprises:
- a mounting base (61);
- a fixed part (2) with an upper surface (2U), a lower surface (2L), a leading edge (2F) and a trailing edge (2R); and
- a movable part (3) provided with a reflecting front surface (31);
wherein
- the movable part (3) is hinged to the fixed part (2) on one of its leading or trailing edges, so that it can rotate around a corresponding hinge axis (A32), such that the movable part (3) can assume a closed position in which its rear surface (310) opposite the reflecting surface (31) is close to the lower surface (2L) of the fixed part (2) and an open position in which its rear surface (310) is spaced from the lower surface (2L) of the fixed part (2) and the front reflecting surface (31) is visible; and
- the mounting base (61) comprises a joint (6) which allows the aerodynamic appendage (1) to be oriented according to a variety of use positions.

It is also apparent from the foregoing description that an aerodynamic appendage in accordance with the present invention may have one or more of the following further features, also combined with each other:
- the trailing edge (2R) of the fixed part (2) has a recess (2D) in which a tubular protrusion (30) of the mobile part (3) is located and a pin (32) joins the mobile part (3) with the fixed part (2) passing axially, along said hinge axis (A32), in the tubular protrusion (30) and in the trailing edge (2R) of the fixed part (2).
- said tubular protrusion (30) constitutes a part of the trailing edge (2R) of the fixed part (2).
- the lower surface (2L) of the fixed part (2) has a recess (2V) whose shape corresponds to the shape of the mobile part (3) so that, in said closed position, the rear surface (310) of the mobile part (3) is inside the recess (2V).
- said joint (6) is constituted by a spherical joint located in one end (20) of the fixed part (2).
- said end (20) of the fixed part (2) is bent downwards.
- the fixed part (2) has a first area larger than a second area where the mobile part (3) is hinged.
- in the open position the mobile part (3) is aerodynamically shielded by the fixed part (2).

In practice, the execution details may, however, vary in an equivalent manner with respect to the individual elements described and illustrated, without departing from the idea of the solution adopted and therefore remaining within the limits of the protection granted by the present patent in accordance with the following claims.

## Claims

1. Aerodynamic appendage (1) comprising:
- a mounting base (61);
- a fixed part (2) with an upper surface (2U), a lower surface (2L), a leading edge (2F) and a trailing edge (2R); and
- a movable part (3) provided with a reflecting front surface (31);
wherein
- the movable part (3) is hinged to the fixed part (2) on one of its leading or trailing edges, so that it can rotate around a corresponding hinge axis (A32), such that the movable part (3) can assume a closed position in which its rear surface (310) opposite the reflecting surface (31) is close to the lower surface (2L) of the fixed part (2) and an open position in which its rear surface (310) is spaced from the lower surface (2L) of the fixed part (2) and the front reflecting surface (31) is visible; and
- the mounting base (61) comprises a joint (6) which allows the aerodynamic appendage (1) to be oriented according to a variety of use positions.

2. Aerodynamic appendage according to claim 1 wherein the trailing edge (2R) of the fixed part (2) has a recess (2D) in which a tubular protrusion (30) of the mobile part (3) is located and a pin (32) joins the mobile part (3) with the fixed part (2) passing axially, along said hinge axis (A32), in the tubular protrusion (30) and in the trailing edge (2R) of the fixed part (2).

3. Aerodynamic appendage according to claim 2 wherein said tubular protrusion (30) constitutes a part of the trailing edge (2R) of the fixed part (2).

4. Aerodynamic appendage according to claim 1 wherein the lower surface (2L) of the fixed part (2) has a recess (2V) whose shape corresponds to the shape of the mobile part (3) so that, in said closed position, the rear surface (310) of the mobile part (3) is inside the recess (2V).

5. Aerodynamic appendage according to claim 1 wherein said joint (6) is constituted by a spherical joint located in one end (20) of the fixed part (2).

6. Aerodynamic appendage according to claim 5 wherein said end (20) of the fixed part (2) is bent downwards.

7. Aerodynamic appendage according to claim 1 wherein the fixed part (2) has a first area larger than a second area where the mobile part (3) is hinged.

8. Aerodynamic appendage according to claim 1 wherein in the open position the mobile part (3) is aerodynamically shielded by the fixed part (2).

9. Kit comprising two aerodynamic appendages (1) according to one or more of the previous claims.
